# EUROPÄISCHE PATENTSCHRIFT

(11) **EP 3 995 692 B1**
(45) Veröffentlichungstag und Bekanntmachung des Hinweises auf die Patenterteilung: **11.01.2023**
(21) Anmeldenummer: 20205786.5
(22) Anmeldetag: 04.11.2020
(51) Int. Cl.: B60P 3/40, F03D 13/40

(54) **VERFAHREN ZUM TRANSPORT EINES FLÜGELS FÜR EINE WINDKRAFTANLAGE**
METHOD OF TRANSPORTING A WIND TURBINE BLADE
PROCÉDÉ DE TRANSPORT D'UNE PALE D'ÉOLIENNE

(43) Veröffentlichungstag der Anmeldung: 11.05.2022
(73) Patentinhaber: Trans Adm, 4780 Recht - St. Vith (BE); Adams, Peter, 4770 Amel - Meyerode (BE)
(72) Erfinder: ADAMS, Peter, 4770 Amel-Meyerode (BE)
(74) Vertreter: Manitz Finsterwald Patent- und Rechtsanwaltspartnerschaft mbB

(56) Entgegenhaltungen:
- WO-A1-2011/076238
- WO-A1-2015/035997
- DE-U1-202012 009 855

## Beschreibung

Die Erfindung betrifft ein Verfahren zum Transport eines Flügels für eine Windkraftanlage unter Verwendung eines einen Flanschkörper aufweisenden Adapterflansches.

Bei einem solchen Verfahren dient der Adapterflansch üblicherweise zur Kopplung des Flügels mit einem Transportfahrzeug. Adapterflansche zur Kopplung eines Flügels mit einem Transportfahrzeug sind beispielsweise aus den Druckschriften WO 2015/035997 A1, WO 2011/076238 A1 oder DE 20 2012 009 855 U1 bekannt.

Im Allgemeinen umfasst ein Adapterflansch einen sich in einer Erstreckungsebene erstreckenden Flanschkörper, welcher ein Flügelkopplungsmittel zur lösbaren Kopplung des Flanschkörpers mit dem Flügel und ein Fahrzeugkopplungsmittel zur lösbaren Kopplung des Flanschkörpers mit dem Transportfahrzeug aufweist. Durch die Verbindung des Flügels mit dem Transportfahrzeug mittels des Adapterflansches lässt sich der Flügel beispielsweise von einem Herstellungsort an einen Montageort transportieren. Dabei erfolgt der Transport des Flügels normalerweise über bereits vorhandene Straßen.

Aktuelle Flügel weisen Längen von 50 m bis 90 m oder mehr auf, so dass ein Transportgespann aus Transportfahrzeug und Flügel eine Länge von bis zu 100 m aufweisen kann. Für einen zügigen Transport eines derart langen Transportgespanns wird als Transportfahrzeug üblicherweise eine Zugmaschine, wie zum Beispiel eine Sattelzugmaschine, verwendet, wobei aufgrund der enormen Länge des Transportgespanns sowie der horizontalen Ausrichtung des Flügels weitestgehend gerade Straßen erforderlich sind. Beim Befahren von engeren Kurven, wie zum Beispiel einer Autobahnanschlussstelle oder einer Haarnadelkurve, kann dahingegen ein Teil des Flügels mit einem die Straße säumenden Objekt in Berührung kommen, wodurch sowohl der Flügel als auch das Objekt Schaden nehmen können.

Damit der Flügel an dem Objekt vorbei manövriert werden kann, wird üblicherweise ein Transportfahrzeug mit einem Schwenkmechanismus, wie zum Beispiel ein Hebefahrzeug bzw. ein sogenannter Blade-Lifter, eingesetzt, mittels welchem sich der Flügel unter einem Winkel von bis zu 70° gegenüber der Horizontalen aufrichten lässt, so dass der Flügel über das Objekt hinwegragt.

Bevor das Hebefahrzeug zum Einsatz gelangt, ist es jedoch erforderlich, den Flügel von der Zugmaschine abzukoppeln und anschließend an das Hebefahrzeug anzukoppeln. Während dieses Wechsels der Transportfahrzeuge wird der Flügel für gewöhnlich mittels eines Krans in der Schwebe gehalten. Alternativ kann der Kran auch dazu verwendet werden, den von dem Transportfahrzeug abgekoppelten Flügel entlang der Kurve über das Objekt schwebend hinwegzubewegen, ohne dass dabei ein Hebefahrzeug zum Einsatz kommt.

Die Verwendung eines Krans sowohl für den Wechsel der Transportfahrzeuge als auch für das Bewegen des Flügels über das Objekt hinweg bedarf aufwendiger Vorbereitungen und ist besonders zeitintensiv. Überdies ist es aus sicherheitstechnischen Gründen erforderlich, einen Bereich im Schwenkradius des Krans sowie einen zusätzlichen Sicherheitsabstand für den an dem Kran hängenden Flügel abzusperren. Vorzugsweise erfolgt die Sperrung der Straße in den Nachtstunden, da zu dieser Zeit das Verkehrsaufkommen geringer ist, allerdings mit einer Störung der Nachtruhe der Anwohner einhergeht. Eine Sperrung tagsüber, insbesondere eine Vollsperrung, kann dahingegen zum vollständigen Erliegen des Verkehrs führen. Da der abzusperrende Bereich zudem oftmals beide Fahrtrichtungen umfasst, sind in der Regel Beeinträchtigungen des Verkehrs in beiden Richtung zu befürchten. Es besteht somit der Bedarf, den Transport eines Flügels einfacher und zügiger zu gestalten.

Es ist daher eine Aufgabe der Erfindung, ein Verfahren bereitzustellen, welches einen einfacheren und schnelleren Wechsel der Transportfahrzeuge ermöglicht.

Die Aufgabe wird durch ein Verfahren mit den Merkmalen des Anspruchs 1 gelöst.

Der Erfindung liegt der allgemeine Gedanke zugrunde, dass sich ein Wechsel von Transportfahrzeugen zum Transport eines Flügels für eine Windkraftanlage schneller und leichter durchführen lässt, wenn der Flügel während des Wechsels anstelle eines Krans mittels einer an einem Adapterflansch ausgebildeten Stütze zum Boden beabstandet gehalten wird.

Hierdurch ergibt sich der Vorteil, dass eine Beeinträchtigung des Verkehrs allenfalls nur von kurzer Dauer ist und sich der Flügel insgesamt schneller an seinen Bestimmungsort transportieren lässt. Da es während des Umkoppelvorgangs keines Krans bedarf, ergibt sich außerdem der Vorteil, dass ein für den Verkehr abzusperrender Bereich deutlich kleiner ausfallen kann. Insbesondere kann auf eine Vollsperrung verzichtet werden. Ferner ergibt sich der Vorteil, dass sich ein Umkoppelvorgang auch dort bewerkstelligen lässt, wo die räumlichen Gegebenheiten für einen Kran ungeeignet sind.

Vorteilhafte Ausbildungen der Erfindung sind den Unteransprüchen, der Beschreibung und den Zeichnungen zu entnehmen.

Gemäß einer besonders einfachen Ausgestaltung des Adapterflansches kann es sich bei der Stütze um eine starre Stütze handeln. Die Stütze kann aber auch höhenverstellbar sein, d.h. in vertikaler Richtung verlagerbar sein. Auf diese Weise kann der Flanschkörper des Adapterflansches verhältnismäßig einfach auf eine bestimmte Höhe gebracht werden, wodurch sich das an dem Flanschkörper ausgebildete Fahrzeugkopplungsmittel bezüglich eines an dem Transportfahrzeug vorgesehenen Gegenkopplungsmittels ausrichten lässt. Es versteht sich, dass der Flanschkörper durch die höhenverstellbare Stütze auch bezüglich des Flügels ausgerichtet werden kann. Durch die höhenverstellbare Ausgestaltung der Stütze ergibt sich außerdem der Vorteil, dass die Stütze während des Transports des Flügels in einer eingefahrenen Stellung verweilen kann, so dass die Stütze während des Transports zum Boden beabstandet ist und keinen Schaden nehmen kann.

Die höhenverstellbare Stütze kann als mechanische oder hydraulische Teleskopstütze ausgebildet sein, wie zum Beispiel in Form einer Ratschenstütze, einer Scherenstütze, einer Kurbelstütze, einer Spindelstütze oder einer Hydraulikstütze.

Grundsätzlich ist es ausreichend, wenn der Flanschkörper mittels nur einer Stütze abgestützt wird. Zu diesem Zweck kann die Stütze vorteilhafterweise an einem dem Boden zugewandten Bereich des Flanschkörpers ausgebildet sein. Für einen besonders sicheren Stand des Adapterflansches kann aber auch mindestens eine Stütze jeweils seitlich des Flanschkörpers angebracht sein.

Um die Standsicherheit des Adapterflansches zusätzlich zu erhöhen kann die Stütze seitlich nach außen verlagerbar sein. Seitlich bezieht sich auf eine sich zumindest annähernd rechtwinklig zur Erstreckungsebene des Flanschkörpers erstreckende Kurzseite des Flanschkörpers, insbesondere welche sich im Wesentlichen in vertikaler Richtung erstreckt. Bevorzugt ist die Stütze durch eine seitliche Verlagerung in horizontaler Richtung verlagerbar.

Durch die seitlich nach außen gerichtete Verlagerung der Stütze ist es außerdem möglich, dass ein Teil des Transportfahrzeugs unter den Flanschkörper fahren kann, um so ein sicheres Ankoppeln des Adapterflansches an das Transportfahrzeug zu ermöglichen.

Grundsätzlich kann die Stütze aber auch so ausgestaltet sein, dass sie sowohl in horizontaler als auch in vertikaler Richtung, d.h. schräg verlagerbar ist.

Vorzugsweise ist an dem Flanschkörper eine Aufnahme vorgesehen, welche die Stütze zumindest abschnittsweise aufnimmt. Die Aufnahme kann gemäß einer besonders einfachen Ausgestaltung des Adapterflansches dazu dienen, eine starre Stütze aufzunehmen. Während des Transports kann es vorgesehen sein, die starre Stütze aus der Aufnahme zu entfernen, damit die Stütze nicht verloren gehen kann.

Für einen besonders stabilen Stand und eine besonders kompakte Bauweise des Adapterflansches kann die Aufnahme zwischen dem Flügelkopplungsmittel und dem Fahrzeugkopplungsmittel angeordnet sein. Hierdurch sind das Flügelkopplungsmittel und das Fahrzeugkopplungsmittel frei zugänglich. Bevorzugt ist die Aufnahme in einer Ebene angeordnet, welche zumindest annähernd koplanar zur Erstreckungsebene des Flanschkörpers ist. Die Aufnahme kann aber auch in einer zur Erstreckungsebene beabstandeten Ebene angeordnet sein, welche sich zumindest annähernd parallel zur Erstreckungsebene des Flanschkörpers erstreckt.

Das Flügelkopplungsmittel kann eine Vielzahl von Bohrungen umfassen, welche zur Aufnahme von an einer Wurzel des Flügels vorgesehenen Befestigungsbolzen, insbesondere Schraubbolzen, ausgebildet sind. Eine derartige Ausbildung des Flügelkopplungsmittels ist insbesondere vorteilhaft, da die Befestigungsbolzen ohnehin an der Flügelwurzel vorgesehen sind, nämlich zur Befestigung des Flügels an einer Nabe der Windkraftanlage. Es ist aber auch denkbar, dass das Flügelkopplungsmittel durch zwei die Flügelwurzel umgreifende Manschetten oder durch einen die Flügelwurzel aufnehmenden Ring gebildet sein kann.

Vorteilhafterweise sind die Bohrungen entlang einer runden, insbesondere kreisrunden, Linie angeordnet, wobei die Linie insbesondere eine geschlossene Kurve bilden kann. Es versteht sich, dass die Form der Linie durch die Anordnung der Befestigungsbolzen an der Flügelwurzel vorgegeben ist. Da die meisten Flügelwurzeln der Einfachheit halber einen kreisrunden Querschnitt aufweisen, sind die Bohrungen an dem Adapterflansch vorteilhafterweise entlang einer kreisrunden Linie angeordnet. Es versteht sich, dass die Bohrungen aber auch entlang einer runden Linie angeordnet sein können, welche die Form eines gewölbten Flügelquerschnittprofils aufweist.

Für eine vielseitigere Anwendung des Adapterflansches kann ein erster Satz von Bohrungen entlang einer runden, insbesondere kreisrunden, ersten Linie angeordnet sein und mindestens ein zweiter Satz von Bohrungen entlang einer runden, insbesondere kreisrunden, zweiten Linie, wobei die erste Linie und die zweite Linie unterschiedliche Radialabstände zu der senkrecht durch die Erstreckungsebene des Flanschkörpers verlaufenden Mittenachse des Flanschkörpers aufweisen. Mit anderen Worten unterscheiden sich die Radien der durch den ersten Satz von Bohrungen verlaufenden ersten Linie und der durch den zweiten Satz von Bohrungen verlaufenden zweiten Linie. Hierdurch ist es möglich verschieden große Flügel mit unterschiedlichen Wurzeldurchmessern zu transportieren. Es versteht sich, dass der Adapterflansch auch mehrere Bohrungen aufweisen kann, welche entlang unterschiedlich geformter Flügelquerschnittsprofile angeordnet sind. Überdies versteht es sich, dass die Bohrungen je nach Größe der Befestigungsbolzen unterschiedlich große Durchmesser aufweisen können.

Eine noch vielseitigere Verwendungsmöglichkeit des Adapterflansches wird außerdem erreicht, wenn der Adapterflansch ein erstes Fahrzeugkopplungsmittel und mindestens ein zweites Fahrzeugkopplungsmittel aufweist, wobei das zweite Fahrzeugkopplungsmittel unter einem in der Erstreckungsebene liegenden Winkel α, zum Beispiel von 180°, versetzt zu dem ersten Fahrzeugkopplungsmittel an dem Flanschkörper ausgebildet ist. Dabei können das erste Fahrzeugkopplungsmittel und das zweite Fahrzeugkopplungsmittel identisch ausgebildet sein, wodurch sich der Flügel unter unterschiedlichen Stellungen bezüglich einer Drehung um dessen Längsachse transportieren lässt. Hierdurch lässt sich beispielsweise eine auf den Flügel wirkende Windlast durch geeignete Verdrehung des Flügels abschwächen. Die Verdrehung erfolgt dabei um die Mittenachse des Flanschkörpers, wobei die Mittenachse des Flanschkörpers und eine Längsachse des Flügels im gekoppelten Zustand zumindest annähernd parallel, insbesondere koaxial, zueinander ausgerichtet sein können.

Grundsätzlich können aber auch das erste Fahrzeugkopplungsmittel und das zweite Fahrzeugkopplungsmittel gemeinsam dazu verwendet werden, den Adapterflansch an das Transportfahrzeug zu koppeln, wodurch eine stabilere und sicherere Kopplung zwischen Adapterflansch und Transportfahrzeug möglich ist.

Das erste Fahrzeugkopplungsmittel und das zweite Fahrzeugkopplungsmittel können aber auch unterschiedlich ausgebildet sein, wodurch unterschiedliche Fahrzeugkopplungsmittel für verschiedene Transportfahrzeuge an dem Adapterflansch zur Verfügung stehen. Somit ist es durch Verdrehung des Adapterflansches möglich, den Adapterflansch mit unterschiedlichen Transportfahrzeugen zu koppeln.

Vorzugsweise ist der Winkel α zumindest annähernd gleich 180°, d.h. der Adapterflansch kann zwei Fahrzeugkopplungsmittel aufweisen. Es ist aber auch denkbar, dass der Winkel α zumindest annähernd 120° beträgt und der Adapterflansch drei Fahrzeugkopplungsmittel aufweist. In entsprechender Weise kann der Winkel α auch zumindest annähernd 90° betragen, wenn der Adapterflansch vier Fahrzeugkopplungsmittel aufweist. Weist der Flanschkörper mehrere Fahrzeugkopplungsmittel auf, können mindestens zwei der Fahrzeugkopplungsmittel identisch ausgebildet sein. Es ist aber auch denkbar, dass alle Fahrzeugkopplungsmittel unterschiedlich ausgebildet sein können.

Gemäß einer besonders einfachen Ausgestaltung kann das Fahrzeugkopplungsmittel mindestens einen, insbesondere horizontal ausgerichteten, Bolzen aufweisen, welcher zur Aufnahme in einer an dem Transportfahrzeug vorgesehenen Klauenkupplung ausgebildet ist. Es ist aber auch denkbar, dass der Adapterflansch elektromagnetisch mit dem Transportfahrzeug gekoppelt wird, wobei das Transportfahrzeug einen Elektromagneten und das Fahrzeugkopplungsmittel beispielsweise ein magnetisches oder magnetisierbares Material aufweisen kann.

Grundsätzlich können bzw. kann das Flügelkopplungsmittel und/oder das Fahrzeugkopplungsmittel zumindest abschnittsweise seitlich an dem Flanschkörper ausgebildet sein. Beispielsweise können bzw. kann das Flügelkopplungsmittel und/oder das Fahrzeugkopplungsmittel in der Erstreckungsebene des Flanschkörpers angeordnet sein. Gemäß einer konstruktiv vorteilhaften Ausgestaltung des Adapterflansches sind das Flügelkopplungsmittel an einer ersten Seite des Flanschkörpers und das Fahrzeugkopplungsmittel an einer der ersten Seite gegenüberliegenden zweiten Seite des Flanschkörpers ausgebildet.

Eine besonders leichte und materialsparende Bauweise des Adapterflansches lässt sich erreichen, wenn der Flanschkörper ringförmig, insbesondere kreisringförmig, ausgebildet ist.

Gegebenenfalls kann es zum Transport mit dem ersten Transportfahrzeug erforderlich sein, den Flügel auf einem in Längserstreckung des Flügels zu dem Adapterflansch beabstandeten Auflieger abzustützen. Durch Hochschwenken des Flügels mittels des zweiten Transportfahrzeugs kann die Abstützung des Flügels auf dem Auflieger aufgehoben werden.

Bei dem Verfahren ist es durchaus denkbar, dass der Adapterflansch nicht zuerst an den Flügel und anschließend an das erste Transportfahrzeug, sondern in umgekehrter Reihenfolge zunächst an das erste Transportfahrzeug und anschließend an den Flügel gekoppelt wird. Grundsätzlich ist es aber von Vorteil, wenn der Adapterflansch zuerst an den Flügel koppelt wird, da der mittels des Adapterflansches abgestützte Flügel so auf einfache Weise für den Abtransport mittels des ersten oder zweiten Transportfahrzeugs bereitgestellt werden kann.

Das Verfahren kann ferner den Schritt umfassen, dass hinter der Kurve das zweite Transportfahrzeug von dem Adapterflansch abgekoppelt und das erste Transportfahrzeug erneut an den Adapterflansch angekoppelt wird. Entsprechend kann auch der gegebenenfalls vorgesehene Auflieger hinter der Kurve wieder zur Abstützung des Flügels bereitgestellt werden.

Aus Platzgründen erfolgt der Transport des horizontal ausgerichteten Flügels üblicherweise bevorzugt entlang von Autobahnen. Problematisch erweist sich hierbei regelmäßig das Auffahren des Transportgespanns auf eine Autobahn und entsprechend das Abfahren von der Autobahn, da der Kurvenradius von Autobahnanschlussstellen normalerweise so eng ist, dass sie durch das Transportgespann nicht ohne weiteres durchfahren werden können. Die Verwendung des erfindungsgemäßen Adapterflansches beschleunigt den Transportfahrzeugwechsel und vereinfacht somit insgesamt das Auf- und Abfahren auf die bzw. von der Autobahn, da hierfür weder eine Vollsperrung der Autobahn noch eine länger andauernde Teilsperrung der Autobahn erforderlich ist. Vielmehr ist es nunmehr möglich, unter Einrichtung einer reinen Nachtbaustelle, bei welcher wenigstens eine Fahrspur in Fahrtrichtung für den regulären Verkehr freigehalten wird, bis zu zwei Flügel über eine Anschlussstelle auf die Autobahn aufzufahren oder von dieser abzufahren. Es versteht sich, dass der Verkehr in Gegenrichtung durch das Hochschwenken des Flügels beim Durchfahren der Anschlussstelle mit Ausnahme einer eventuellen Geschwindigkeitsbegrenzung nicht beeinträchtigt wird.

Gleichwohl die Erfindung bislang im Zusammenhang mit einem Flügel einer Windkraftanlage beschrieben wurde, ist es durchaus denkbar, dass die Erfindung auch im Zusammenhang mit anderen langen Transportgütern betrieben werden kann, beispielsweise zum Transport eines Turms oder eines Turmabschnitts einer Windkraftanlage.

Nachfolgend wird die Erfindung rein beispielhaft anhand von möglichen Ausführungsformen unter Bezugnahme auf die beigefügten Zeichnungen beschrieben. Es zeigen:
- Fig. 1: eine perspektivische Ansicht eines Adapterflansches gemäß einer ersten Ausführungsform mit eingefahrener Stütze;
- Fig. 2: den Adapterflansch von Fig. 1 mit ausgefahrener Stütze;
- Fig. 3: eine perspektivische Ansicht eines Adapterflansches gemäß einer zweiten Ausführungsform ohne Stütze;
- Fig. 4: eine Seitenansicht des Adapterflansches von Fig. 3;
- Fig. 5: eine perspektivische Ansicht eines Adapterflansches gemäß einer dritten Ausführungsform ohne Stütze;
- Fig. 6: eine Seitenansicht des Adapterflansches von Fig. 5;
- Fig. 7a: eine Seitenansicht eines zu transportierenden Flügels, welcher mittels der Stütze eines an den Flügel angekoppelten Adapterflansches abgestützt ist;
- Fig. 7b: eine Seitenansicht des Flügels, welcher mittels des Adapterflansches an ein erstes Transportfahrzeug angekoppelt ist;
- Fig. 7c: eine Seitenansicht des von dem ersten Transportfahrzeug wieder entkoppelten und abgestützten Flügels;
- Fig. 7d: eine Seitenansicht des abgestützten Flügels und eines sich annähernden zweiten Transportfahrzeugs;
- Fig. 7e: eine Seitenansicht des mittels des Adapterflansches mit dem zweiten Transportfahrzeug gekoppelten Flügels; und
- Fig. 7f: eine Seitenansicht des mittels des zweiten Transportfahrzeugs hochgeschwenkten Flügels.

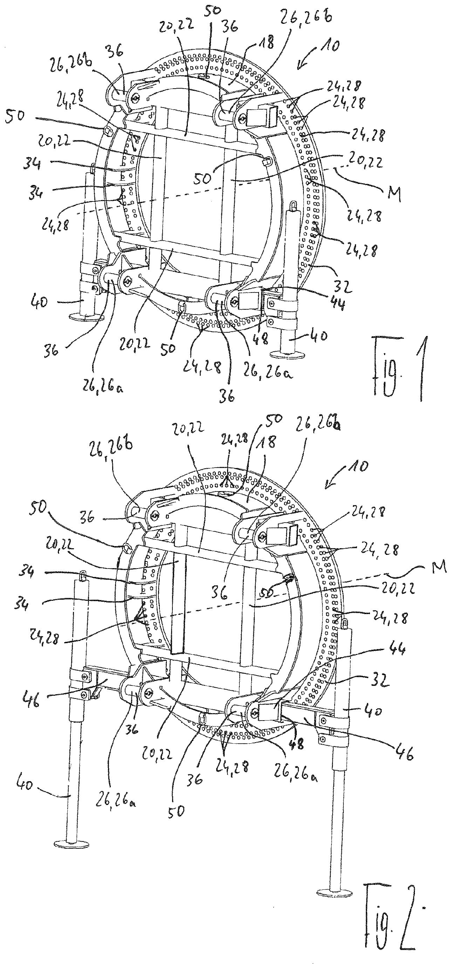

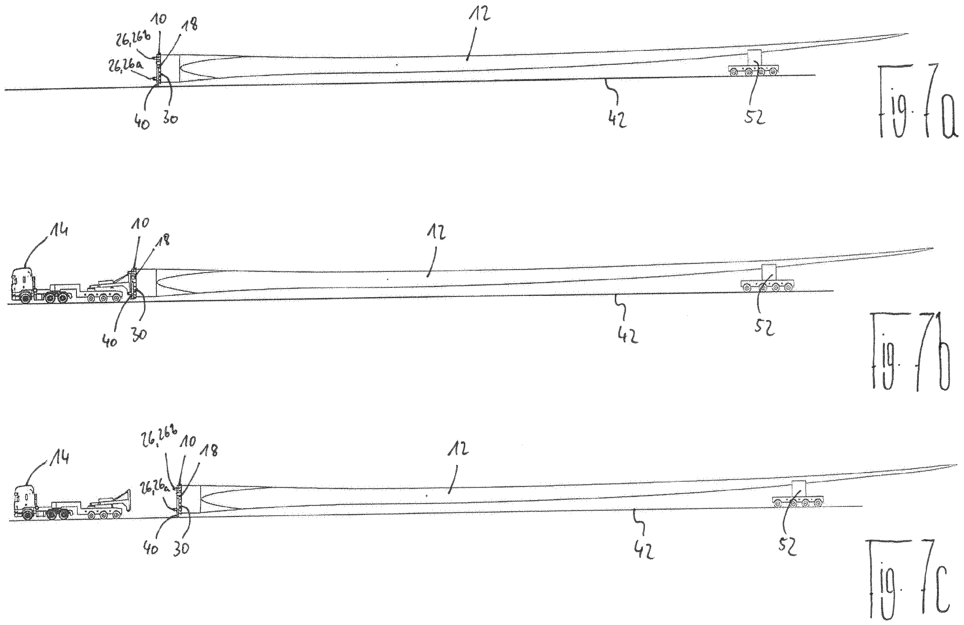

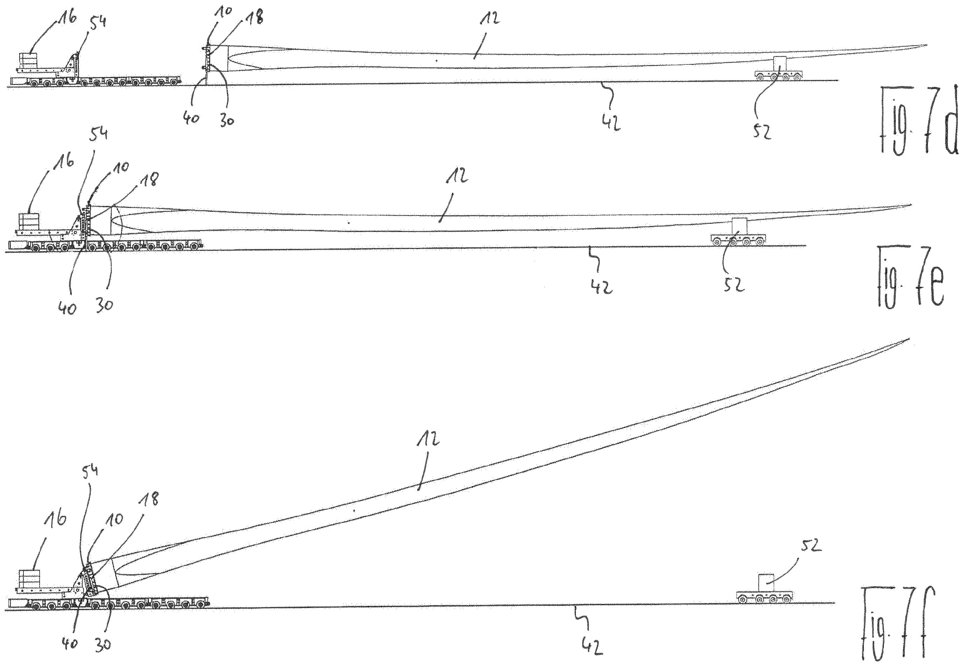

In den Zeichnungen zeigen Fig. 1 bis 6 unterschiedliche Ausführungsformen eines Adapterflansches 10, welcher zur Kopplung eines Transportfahrzeugs 14, 16 mit einem Flügel 12 einer nicht weiter dargestellten Windkraftanlage dient. Fig. 7a bis 7f zeigen verschiedene Schritte eines Verfahrens zum Transport des Flügels 12.

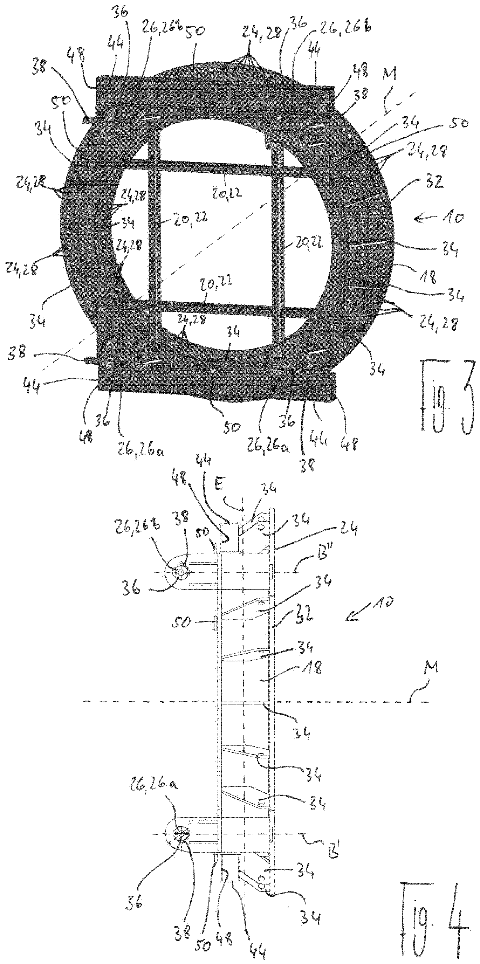

Im Folgenden wird zunächst der allgemeine Aufbau eines Adapterflansches 10 anhand einer in Fig. 1 und 2 dargestellten ersten Ausführungsform des Adapterflansches 10 beschrieben, wobei auch auf die in den Fig. 3 bis 6 dargestellten weiteren Ausführungsformen des Adapterflansches 10 Bezug genommen wird.

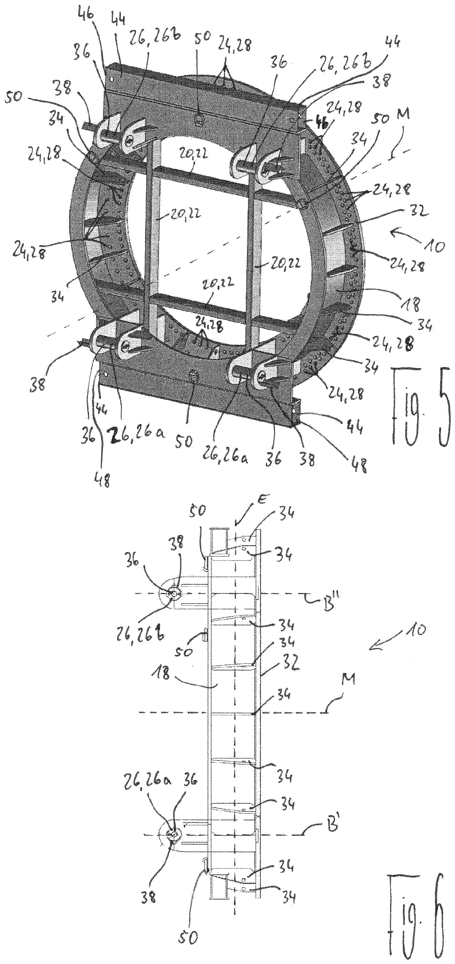

Der Adapterflansch 10 umfasst einen ringförmigen Flanschkörper 18, welcher sich in einer Erstreckungsebene E erstreckt (Fig. 4 und 6). In den dargestellten Ausführungsbeispielen ist der Flanschkörper 18 kreisringförmig ausgebildet. Es versteht sich, dass der Flanschkörper 18 aber auch eine andere Geometrie aufweisen kann. Beispielsweise kann der Flanschkörper 18 auch rechteckig oder in Form eines Vielecks mit beispielsweise fünf, sechs oder mehr Ecken ausgebildet sein.

Zur Erhöhung der Stabilität des Flanschkörpers 18 ist eine Verstrebung 20 mit vier im Wesentlichen rautenförmig angeordneten Streben 22 vorgesehen. Die Verstrebung 20 ist zumindest annähernd koplanar zur Erstreckungsebene E des Flanschkörpers 18 ausgerichtet. Grundsätzlich kann die Verstrebung 20 auch mehr oder weniger als vier Streben 22 aufweisen. Überdies ist die rautenförmige Anordnung der Streben 22 nicht zwingend erforderlich. Beispielsweise kann die Verstrebung 20 auch durch drei zu einem Dreieck ausgerichtete Streben 22 gebildet sein.

An dem Flanschkörper 18 ist sowohl ein Flügelkopplungsmittel 24 zur lösbaren Kopplung des Flanschkörpers 18 mit dem Flügel 12 als auch ein Fahrzeugkopplungsmittel 26 zur lösbaren Kopplung des Flanschkörpers 18 mit einem der Transportfahrzeuge 14, 16 ausgebildet. Wie beispielsweise aus Fig. 4 und 6 hervorgeht, ist das Flügelkopplungsmittel 24 auf einer Seite des Flanschkörpers 18 und das Fahrzeugkopplungsmittel 26 auf einer gegenüberliegenden Seite des Flanschkörpers 18 ausgebildet, wodurch sich der Flügel 12 und das Transportfahrzeug 14, 16 auf gegenüberliegenden Seiten des Flanschkörpers 18 an diesen ankoppeln lassen.

Das Flügelkopplungsmittel 24 umfasst eine Vielzahl von Bohrungen 28, welche zur Aufnahme von an einer Wurzel 30 des Flügels 12 vorgesehenen Befestigungsbolzen, insbesondere Schraubbolzen, ausgebildet sind. Da die Wurzel 30 eines Flügels 12 üblicherweise ein kreisrundes Querschnittsprofil aufweist, sind die Befestigungsbolzen in entsprechender Weise entlang einer kreisrunden Linie an der Wurzel 30 des Flügels 12 angeordnet. Demnach sind auch die Bohrungen 28 des Flügelkopplungsmittels 24 entlang einer entsprechend kreisrunden Linie angeordnet. Es versteht sich, dass die Bohrungen 28 aber auch entlang einer anders gestalteten Linie angeordnet sein können, wenn die Wurzel 30 des Flügels 12 ein anderes Querschnittsprofil, zum Beispiel das eines gewölbten Flügels, aufweist.

Damit der Adapterflansch 10 für eine Vielzahl unterschiedlicher Flügel 12 mit verschiedenen Wurzelumfängen verwendet werden kann. Weist der Adapterflansch 10 mehrere Sätze von Bohrungen 28 auf. Der in Fig. 1 und 2 dargestellte Adapterflansch 10 umfasst konkret fünf Sätze von Bohrungen 28, wohingegen der in Fig. 3 und 4 dargestellte Adapterflansch 10 drei Sätze von Bohrungen 28 und der in Fig. 5 und 6 dargestellte Adapterflansch 10 vier Sätze von Bohrungen aufweist. Dabei sind die Bohrungen 28 jedes Satzes von Bohrungen 28 jeweils entlang einer Kreislinie angeordnet, wobei sich die Radien der jeweiligen Sätze von Bohrungen 28 unterscheiden. Mit anderen Worten weisen die Sätze von Bohrungen 28 unterschiedliche Radialabstände zu einer senkrecht zur Erstreckungsebene E verlaufenden Mittenachse M des Flanschkörpers 18 auf.

Die Bohrungen 28 des Flügelkopplungsmittels 24 sind in einer plan ausgestalteten ringförmigen Flanschplatte 32 vorgesehen, welche zur Erhöhung der Stabilität mittels Winkelstreben 34 an dem Flanschkörper 18 befestigt ist.

In den dargestellten Ausführungsbeispielen weist der Adapterflansch 10 jeweils zwei Fahrzeugkopplungsmittel 26a, 26b auf, welche unter einem in der Erstreckungsebene E liegenden Winkel α versetzt zueinander angeordnet sind. In dem vorliegenden Ausführungsbeispiel ist ein erstes Fahrzeugkopplungsmittel 26a unter einem Winkel von 180° zu einem zweiten Fahrzeugkopplungsmittel 26b angeordnet. Grundsätzlich können die Fahrzeugkopplungsmittel 26a, 26b auch unter einem anderen Winkel α zueinander angeordnet sein. Auch ist denkbar, dass der Adapterflansch 10 mehr oder weniger als zwei Fahrzeugkopplungsmittel 26a, 26b aufweisen kann.

Überdies ist es auch denkbar, dass sowohl das erste Fahrzeugkopplungsmittel 26a als auch das zweite Fahrzeugkopplungsmittel 26b gemeinsam zur Kopplung mit einem Transportfahrzeug 14, 16 verwendet werden.

Jedes der Fahrzeugkopplungsmittel 26a, 26b umfasst in den dargestellten Ausführungsbeispielen zwei horizontal ausgerichtete Bolzen 36, welche zur Aufnahme in einer an dem Transportfahrzeug 14, 16 vorgesehenen Klauenkupplung ausgebildet sind. Grundsätzlich kann mindestens ein Bolzen 36 aber auch vertikal oder unter einem zur Vertikalen bzw. Horizontalen schrägen Winkel ausgerichtet sein.

Wie aus Fig. 3 bis 6 hervorgeht, ist für eine einfachere Montage und leichteren Wechsel der Bolzen 36 jedem Bolzen 36 eine Bolzenführung 38 in Form von V-förmigen Rinnen zugeordnet. Die Bolzenführung 38 erstreckt sich jeweils in einer Längserstreckung des montierten Bolzens 36 und ist dazu ausgebildet, den Bolzen 36 im unbefestigten Zustand aufzunehmen.

Der Adapterflansch 10 umfasst außerdem wenigstens eine Stütze 40, welche dazu dient, den Flanschkörper 18 mitsamt daran angekoppeltem Flügel 12 in einem stationären Zustand, d.h. wenn der Flügel nicht an ein Transportfahrzeug 14, 16 gekoppelt ist, zum Boden 42 beabstandet abzustützen (vgl. Fig. 7a, 7c und 7d). In den dargestellten Ausführungsbeispielen umfasst der Adapterflansch 10 zwei höhenverstellbare Stützen 40, welche für einen sicheren Stand des Adapterflansches 10 seitlich an dem Flanschkörper 18 angebracht sind. Genauer gesagt sind die Stützen 40 in einer Aufnahme 44 aufgenommen und dabei rechtwinklig zur Höhenverstellung verschiebbar, mit anderen Worten also horizontal ein- und ausfahrbar. In den Fig. 3 bis 6 sind die Stützen 40 zur besseren Übersicht nicht dargestellt.

Die Stützen 40 dienen nicht nur dazu, den Flanschkörper 18 bzw. den daran befestigten Flügel 12 zum Boden 42 beabstandet zu halten, sondern auch dazu, gezielt eine Höhe des Flanschkörpers 18 bzw. des Flügels 12 über dem Boden 42 einzustellen, wodurch das Fahrzeugkopplungsmittel 26 bezüglich des Transportfahrzeugs 14, 16 ausgerichtet werden kann (vgl. Fig. 7c und 7d). Außerdem können die Stützen 40 während des Transports des Flügels 12 zum Schutz der Stützen 40 eingefahren werden.

Die höhenverstellbaren Stützen 40 können jeweils in Form einer mechanisch oder hydraulisch verlagerbaren Teleskopstütze ausgebildet sein. So kann die Teleskopstütze zum Beispiel als Ratschenstütze, Scherenstütze, Kurbelstütze, Spindelstütze oder Hydraulikstütze realisiert sein.

Indem die Stützen 40 seitlich nach außen verlagerbar sind, verleihen sie dem Adapterflansch 10 einen sichereren Stand. Zum Zweck der seitlichen Verlagerung der Stützen 40 weisen die Stützen 40 jeweils einen Vierkantsteg 46 auf, welcher in einer als Vierkantrohr 48 ausgebildeten Aufnahme 44 aufgenommen ist. Wie aus Fig. 1 und 2 hervorgeht, sind die jeweiligen Stützen 40 und die ihnen jeweils zugeordneten Vierkantstege 46 zumindest annähernd rechtwinklig zueinander ausgerichtet. Grundsätzlich kann der Steg 46 und die Aufnahme 44 auch eine andere als eine rechteckige Querschnittsform aufweisen, zum Beispiel eine polygonale oder runde Querschnittsform.

Jede Aufnahme 44 ist einem der Bolzen 36 des Fahrzeugkopplungsmittels 26 zugeordnet. Es versteht sich, dass sowohl den Bolzen 36 des ersten Fahrzeugkopplungsmittels 26a als auch den Bolzen 36 des zweiten Fahrzeugkopplungsmittels 26b jeweils eine Aufnahme 44 zugeordnet ist, so dass durch Verdrehung des Adapterflansches 10 um den Winkel a, hier 180°, ebenfalls wieder Aufnahmen 44 für die seitlich verlagerbaren Stützen 40 zur Verfügung stehen.

Wie anhand von Fig. 4 und 6 zu erkennen ist, sind die Bolzen 36 des ersten Fahrzeugkopplungsmittels 26a und die Bolzen 36 des zweiten Fahrzeugkopplungsmittels 26b jeweils zur Erstreckungsebene E des Flanschkörpers 18 parallel versetzt angeordnet. Eine zur Erstreckungsebene E des Flanschkörpers 18 rechtwinklig ausgerichtete und durch die Bolzen 36 des ersten Fahrzeugkopplungsmittel 26a verlaufende Ebene wird als erste Ebene B' bezeichnet. In vergleichbarer Weise wird eine zur Erstreckungsebene E des Flanschkörpers 18 rechtwinklig ausgerichtete und durch die Bolzen 36 des zweiten Fahrzeugkopplungsmittels 26b verlaufende Ebene als zweite Ebene B" bezeichnet.

Bei der in Fig. 1 und 2 dargestellten ersten Ausführungsform eines Adapterflansches 10 liegen auch die den Bolzen 36 jeweils zugeordneten Aufnahmen 44 in den jeweiligen Ebenen B', B". Die Aufnahmen 44 können aber auch bezüglich den jeweiligen Ebenen B', B" nach außen versetzt angeordnet sein, wie es Fig. 3 bis 6 zu entnehmen ist. Dabei sind die Aufnahmen 44 des in den Fig. 5 und 6 dargestellten Adapterflansches 10 gemäß der dritten Ausführungsform weiter von den Ebenen B', B" entfernt als die Aufnahmen 44 des in den Fig. 3 und 4 dargestellten Adapterflansches 10 gemäß der zweiten Ausführungsform. Grundsätzlich ist es auch denkbar, dass die Aufnahmen 44 bezüglich der Ebenen B', B" nach innen versetzt sind.

Nachfolgend wird mit Bezug auf Fig. 7a bis 7f ein Verfahren zum Transport eines Flügels 12 für eine Windkraftanlage beschrieben. Zunächst wird der Adapterflansch 10 mittels des Flügelkopplungsmittels 24 an den Flügel 12 angekoppelt (Fig. 7a). Hierfür kann der Adapterflansch 10 mit einem nicht dargestellten Hebekran an den Flügel 12 herangeführt werden, weshalb der Adapterflansch 10 Befestigungsösen 50 aufweist, welche zur Befestigung eines Seils des Hebekrans dienen. Nachdem der Flügel 12 und der Adapterflansch 10 miteinander gekoppelt wurden, dienen die Stützen 40 dazu, den Adapterflansch 10 und den daran angekoppelten Flügel 12 zum Boden 42 beabstandet zu halten.

Der so bereitgestellte Flügel 12 kann mittels des Adapterflansches 10 nun mit einem ersten Transportfahrzeug 14 gekoppelt werden, welches hier in Form einer Zugmaschine 14, insbesondere einer Sattelzugmaschine 14, ausgebildet ist, um ein Transportgespann zu bilden, bei welchem der Flügel 12 seiner Länge nach im Wesentlichen horizontal, d.h. im Wesentlichen parallel zum Boden 42, ausgerichtet ist (Fig. 7b). Aufgrund der Länge des Flügels 12 von 50 m bis zu 90 m oder mehr ist es für einen horizontalen Transport des Flügels 12 erforderlich, den Flügel 12 zusätzlich mit einem in Längserstreckung des Flügels 12 zu dem Adapterflansch 10 beabstandeten Auflieger 52 abzustützen. Für einen sicheren Transport kann der Flügel 12 an dem Auflieger 52 befestigt werden.

Das so gebildete Transportgespann kann nun beispielsweise entlang einer Autobahn transportiert werden. Gelangt das Transportgespann an eine Anschlussstelle, an welcher die Autobahn verlassen werden soll, oder an eine vergleichbar enge Kurve, deren Kurvenradius für das Transportgespann zu klein ist, wird der Adapterflansch 10 zusammen mit dem daran gekoppelten Flügel 12 mit Hilfe der Stützen 40 abgestützt und das erste Transportfahrzeug 14 von dem Adapterflansch 10 abgekoppelt (Fig. 7c). Nachdem das erste Transportfahrzeug 14 von dem abgestützten Adapterflansch 10 weggefahren ist, wird ein zweites Transportfahrzeug 16, nämlich ein Hebefahrzeug, an den Adapterflansch 10 herangefahren und mit diesem gekoppelt (Fig. 7d und 7e). Gegebenenfalls kann es beim Abkoppeln des ersten Transportfahrzeugs 14 und Ankoppeln des zweiten Transportfahrzeugs 16 erforderlich sein, mittels der Stützen 40 die Höhe des Flanschkörpers 18 über dem Boden 42 anzupassen, um den Ab- bzw. Ankoppelvorgang zu erleichtern (Fig. 7c und 7d). Nach dem Ankoppeln des Flügels 12 an das zweite Transportfahrzeug 16 werden die Stützen 40 wieder eingefahren.

Nach dem Wechsel der Transportfahrzeuge 14, 16 lässt sich der an dem zweiten Transportfahrzeug 16 angekoppelte Flügel 12 mittels einer Schwenkmechanik 54 des zweiten Transportfahrzeugs 16 gegenüber der Horizontalen hochschwenken. Dabei wird der Flügel 12 von dem Auflieger 52 abgehoben.

Die Schwenkmechanik 54 des zweiten Transportfahrzeugs 16 erlaubt es, den Flügel 12 um einen Winkel von bis zu 70° gegenüber der Horizontalen aufzurichten, damit sich der Flügel 12 während des Transports entlang der Anschlussstelle über sich auf der Autobahn befindliche Fahrzeuge und/oder die Anschlussstelle eventuell säumende Hindernisse, wie zum Beispiel Verkehrsschilder, Bäume oder Gebäude, hinwegbewegen kann. Es versteht sich, dass es je nach örtlichen Begebenheiten ausreichend sein kann, den Flügel 12 um einen Winkel von nur 10° bis 30° gegenüber der Horizontalen aufzurichten.

Nach der Durchfahrt der Anschlussstelle oder einer vergleichbaren engen Kurve kann der Flügel 12 grundsätzlich weiterhin mittels des zweiten Transportfahrzeugs 16 transportiert werden, beispielsweise wenn sich der Bestimmungsort des Flügels 12 unweit der Anschlussstelle befindet. Für einen zügigeren Weitertransport zu einem weiter entfernten Bestimmungsort empfiehlt sich jedoch ein weiterer Fahrzeugwechsel, bei welchem der Flügel 12 erneut an das erste Transportfahrzeug 14 angekoppelt wird. Zu diesem Zweck kann das erste Transportfahrzeug 14 bereits hinter der Anschlussstelle warten oder bereitgestellt werden.

Der noch mit dem zweiten Transportfahrzeug 16 gekoppelte Flügel 12 wird für den Fahrzeugwechsel zunächst wieder in seine Horizontallage heruntergeschwenkt, auf dem Auflieger 52 abgelegt sowie an diesem befestigt und mittels des Adapterflansches 10 abgestützt. Anschließend wird das zweite Transportfahrzeug 16 von dem abgestützten Flügel 12 abgekoppelt und das erste Transportfahrzeug 14 angekoppelt. Sodann werden die Stützen 40 des Adapterflansches 10 eingefahren und der Flügel 12 durch das erste Transportfahrzeug 14 weitertransportiert.

Erfolgt der Wechsel der Transportfahrzeuge 14, 16 auf einer Autobahn, so ist es erforderlich, mindestens eine Fahrspur der Autobahn in Fahrtrichtung des Transportgespanns zu sperren. Jedenfalls eine Fahrspur in Fahrtrichtung des Transportgespanns kann jedoch für den regulären Verkehr befahrbar bleiben, wodurch eine Vollsperrung der Autobahn sowohl in Fahrtrichtung des Transportgespanns als auch in Gegenfahrtrichtung vermieden wird. Idealerweise erfolgt eine derartige Teilsperrung im Wege einer reinen Nachtbaustelle. Dabei lässt sich der Fahrzeugwechsel aufgrund der Abstützbarkeit des Adapterflansches 10 so schnell durchführen, dass sogar zwei Flügel 12 mittels desselben zweiten Transportfahrzeugs 16 in einer einzigen Nacht durch die Anschlussstelle hindurch bewegt werden können.

### Bezugszeichenliste

- 10: Adapterflansch
- 12: Flügel
- 14: erstes Transportfahrzeug
- 16: zweites Transportfahrzeug
- 18: Flanschkörper
- 20: Verstrebung
- 22: Strebe
- 24: Flügelkopplungsmittel
- 26: Fahrzeugkopplungsmittel
- 28: Bohrungen
- 30: Wurzel
- 32: Flanschplatte
- 34: Winkelstrebe
- 36: Bolzen
- 38: Bolzenführung
- 40: Stütze
- 42: Boden
- 44: Aufnahme
- 46: Vierkantsteg
- 48: Vierkantrohr
- 50: Befestigungsösen
- 52: Auflieger
- 54: Schwenkmechanik

- B': erste Ebene
- B": zweite Ebene
- E: Ebene
- M: Mittenachse

## Patentansprüche

1. Verfahren zum Transport eines Flügels (12) für eine Windkraftanlage unter Verwendung eines Adapterflansches (10) mit einem sich in einer Erstreckungsebene (E) erstreckenden Flanschkörper (18) und mindestens einer Stütze (40), welche dazu dient, den Flanschkörper (18) zum Boden (42) beabstandet abzustützen, wobei das Verfahren die folgenden Schritte umfasst:
- Ankoppeln des Flügels (12) an den Adapterflansch (10) mittels eines an dem Flanschkörper (18) ausgebildeten Flügelkopplungsmittels (24),
- Ankoppeln des Adapterflansches (10) an ein erstes Transportfahrzeug (14), insbesondere eine Zugmaschine (14), mittels eines an dem Flanschkörper (18) ausgebildeten Fahrzeugkopplungsmittels (26, 26a, 26b), um ein Transportgespann zu bilden, bei welchem der Flügel (12) seiner Länge nach im Wesentlichen horizontal ausgerichtet ist,
- Transport des Flügels (12) bis vor eine Kurve,
- Abstützen des Adapterflansches (10) mittels seiner Stütze (40),
- Abkoppeln des Adapterflansches (10) von dem ersten Transportfahrzeug (14),
- Ankoppeln des Adapterflansches (10) mittels des Fahrzeugkopplungsmittels (26, 26a, 26b) an ein zweites Transportfahrzeug (16), insbesondere ein Hebefahrzeug (16), mit einer Schwenkmechanik (54) zum Hochschwenken des Flügels (12),
- Aufheben der Abstützung des Adapterflansches (10),
- Hochschwenken des Flügels (12) mittels der Schwenkmechanik (54) des zweiten Transportfahrzeugs (16), und
- Transport des hochgeschwenkten Flügels (12) mittels des zweiten Transportfahrzeugs (16) entlang der Kurve.

2. Verfahren zum Transport eines Flügels (12) nach Anspruch 1,
**dadurch gekennzeichnet, dass**
hinter der Kurve das zweite Transportfahrzeug (16) von dem Adapterflansch (10) abgekoppelt und das erste Transportfahrzeug (14) erneut an den Adapterflansch (10) angekoppelt wird.

3. Verfahren zum Transport eines Flügels (12) nach Anspruch 1 oder 2,
**dadurch gekennzeichnet, dass**
die Stütze (40) höhenverstellbar ist.

4. Verfahren zum Transport eines Flügels (12) nach zumindest einem der vorstehenden Ansprüche,
**dadurch gekennzeichnet, dass**
mindestens eine Stütze (40) jeweils seitlich des Flanschkörpers (18) angebracht ist.

5. Verfahren zum Transport eines Flügels (12) nach zumindest einem der vorstehenden Ansprüche,
**dadurch gekennzeichnet, dass**
die Stütze (40) seitlich nach außen verlagerbar ist.

6. Verfahren zum Transport eines Flügels (12) nach zumindest einem der vorstehenden Ansprüche,
**dadurch gekennzeichnet, dass**
an dem Flanschkörper (18) eine Aufnahme (44) vorgesehen ist, welche die Stütze (40) zumindest abschnittsweise aufnimmt.

7. Verfahren zum Transport eines Flügels (12) nach Anspruch 6,
**dadurch gekennzeichnet, dass**
die Aufnahme (44) zwischen dem Flügelkopplungsmittel (24) und dem Fahrzeugkopplungsmittel (26, 26a, 26b) angeordnet ist.

8. Verfahren zum Transport eines Flügels (12) nach zumindest einem der vorstehenden Ansprüche,
**dadurch gekennzeichnet, dass**
das Flügelkopplungsmittel (24) eine Vielzahl von Bohrungen (28) umfasst, welche zur Aufnahme von an einer Wurzel (30) des Flügels (12) vorgesehenen Befestigungsbolzen, insbesondere Schraubbolzen, ausgebildet sind.

9. Verfahren zum Transport eines Flügels (12) nach Anspruch 8,
**dadurch gekennzeichnet, dass**
die Bohrungen (28) entlang einer runden, insbesondere kreisrunden, Linie angeordnet sind.

10. Verfahren zum Transport eines Flügels (12) nach Anspruch 9,
**dadurch gekennzeichnet, dass**
ein erster Satz von Bohrungen (28) entlang einer runden, insbesondere kreisrunden, ersten Linie angeordnet ist und mindestens ein zweiter Satz von Bohrungen (28) entlang einer runden, insbesondere kreisrunden, zweiten Linie angeordnet ist, wobei die erste Linie und die zweite Linie unterschiedliche Radialabstände zu einer senkrecht durch die Erstreckungsebene (E) des Flanschkörpers (18) verlaufenden Mittenachse (M) des Flanschkörpers (18) aufweisen.

11. Verfahren zum Transport eines Flügels (12) nach zumindest einem der vorstehenden Ansprüche,
**dadurch gekennzeichnet, dass**
der Adapterflansch (10) ein erstes Fahrzeugkopplungsmittel (26a) und mindestens ein zweites Fahrzeugkopplungsmittel (26b) aufweist, wobei das zweite Fahrzeugkopplungsmittel (26b) unter einem in der Erstreckungsebene (E) liegenden Winkel (a), insbesondere von 180°, versetzt zu dem ersten Fahrzeugkopplungsmittel (26a) an dem Flanschkörper (18) ausgebildet ist.

12. Verfahren zum Transport eines Flügels (12) nach zumindest einem der vorstehenden Ansprüche,
**dadurch gekennzeichnet, dass**
das Fahrzeugkopplungsmittel (26, 26a, 26b) mindestens einen, insbesondere horizontal ausgerichteten, Bolzen (36) aufweist, welcher zur Aufnahme in einer an dem Transportfahrzeug (14, 16) vorgesehenen Klauenkupplung ausgebildet ist.

13. Verfahren zum Transport eines Flügels (12) nach zumindest einem der vorstehenden Ansprüche,
**dadurch gekennzeichnet, dass**
das Flügelkopplungsmittel (24) an einer ersten Seite des Flanschkörpers (18) und das Fahrzeugkopplungsmittel (26, 26a, 26b) an einer der ersten Seite gegenüberliegenden zweiten Seite des Flanschkörpers (18) ausgebildet sind.

14. Verfahren zum Transport eines Flügels (12) nach zumindest einem der vorstehenden Ansprüche,
**dadurch gekennzeichnet, dass**
der Flanschkörper (18) ringförmig, insbesondere kreisringförmig, ausgebildet ist.

## Claims

1. A method of transporting a blade (12) for a wind turbine using an adapter flange (10) comprising a flange body (18), which extends in a plane of extent (E), and at least one support (40) which serves to support the flange body (18) spaced apart from the ground (42), wherein the method comprises the following steps:
- coupling the blade (12) to the adapter flange (10) by means of a blade coupling means (24) formed at the flange body (18);
- coupling the adapter flange (10) to a first transport vehicle (14), in particular a tractor (14), by means of a vehicle coupling means (26, 26a, 26b) formed at the flange body (18) in order to form a transport rig in which the blade (12) is oriented substantially horizontally along its length;
- transporting the blade (12) to before a curve;
- supporting the adapter flange (10) by means of its support (40);
- uncoupling the adapter flange (10) from the first transport vehicle (14);
- coupling the adapter flange (10) by means of the vehicle coupling means (26, 26a, 26b) to a second transport vehicle (16), in particular a lifting vehicle (16), comprising a pivot mechanism (54) for upwardly pivoting the blade (12);
- cancelling the support of the adapter flange (10);
- upwardly pivoting the blade (12) by means of the pivot mechanism (54) of the second transport vehicle (16); and
- transporting the upwardly pivoted blade (12) by means of the second transport vehicle (16) along the curve.

2. A method of transporting a blade (12) in accordance with claim 1,
**characterized in that**,
behind the curve, the second transport vehicle (16) is uncoupled from the adapter flange (10) and the first transport vehicle (14) is coupled to the adapter flange (10) again.

3. A method of transporting a blade (12) in accordance with claim 1 or claim 2,
**characterized in that**
the support (40) is vertically adjustable.

4. A method of transporting a blade (12) in accordance with at least one of the preceding claims,
**characterized in that**
at least one support (40) is attached to the side of the flange body (18) in each case.

5. A method of transporting a blade (12) in accordance with at least one of the preceding claims,
**characterized in that**
the support (40) can be displaced laterally outwardly.

6. A method of transporting a blade (12) in accordance with at least one of the preceding claims,
**characterized in that**
a receiver (44) that at least sectionally receives the support (40) is provided at the flange body (18).

7. A method of transporting a blade (12) in accordance with claim 6,
**characterized in that**
the receiver (44) is arranged between the blade coupling means (24) and the vehicle coupling means (26, 26a, 26b).

8. A method of transporting a blade (12) in accordance with at least one of the preceding claims,
**characterized in that**
the blade coupling means (24) comprises a plurality of bores (28) which are configured to receive fastening bolts, in particular screw bolts, provided at a root (30) of the blade (12).

9. A method of transporting a blade (12) in accordance with claim 8,
**characterized in that**
the bores (28) are arranged along a round line, in particular a circular line.

10. A method of transporting a blade (12) in accordance with claim 9,
**characterized in that**
a first set of bores (28) is arranged along a round first line, in particular a circular first line, and at least a second set of bores (28) is arranged along a round second line, in particular a circular second line, with the first line and the second line having different radial spacings from a center axis (M) of the flange body (18) extending perpendicular through the plane of extent (E) of the flange body (18).

11. A method of transporting a blade (12) in accordance with at least one of the preceding claims,
**characterized in that**
the adapter flange (10) has a first vehicle coupling means (26a) and at least a second vehicle coupling means (26b), with the second vehicle coupling means (26b) being formed at the flange body (18) offset at an angle (a) lying in the plane of extent (E), in particular of 180°, from the first vehicle coupling means (26a).

12. A method of transporting a blade (12) in accordance with at least one of the preceding claims,
**characterized in that**
the vehicle coupling means (26, 26a, 26b) has at least one pin (36), in particular a horizontally oriented pin (36), which is configured to be received in a dog clutch provided at the transport vehicle (14, 16).

13. A method of transporting a blade (12) in accordance with at least one of the preceding claims,
**characterized in that**
the blade coupling means (24) is formed at a first side of the flange body (18) and the vehicle coupling means (26, 26a, 26b) is formed at a second side of the flange body (18) disposed opposite the first side.

14. A method of transporting a blade (12) in accordance with at least one of the preceding claims,
**characterized in that**
the flange body (18) is annular, in particular circular.

## Revendications

1. Procédé de transport d'une pale (12) pour une installation éolienne en utilisant une bride d'adaptation (10) ayant un corps de bride (18) s'étendant dans un plan d'extension (E) et au moins un support (40) qui sert à soutenir le corps de bride (18) à distance du sol (42), dans lequel le procédé comprend les étapes suivantes consistant à :
- coupler la pale (12) à la bride d'adaptation (10) via un moyen de couplage de pale (24) réalisé au niveau du corps de bride (18),
- coupler la bride d'adaptation (10) à un premier véhicule de transport (14), notamment un tracteur (14), via un moyen de couplage de véhicule (26, 26a, 26b) réalisé au niveau du corps de bride (18) pour former un train de transport dans lequel la pale (12) est orientée sensiblement horizontalement dans le sens de sa longueur,
- transporter la pale (12) jusqu'à avant un virage,
- soutenir la bride d'adaptation (10) via son support (40),
- découpler la bride d'adaptation (10) du premier véhicule de transport (14),
- coupler la bride d'adaptation (10) via le moyen de couplage de véhicule (26, 26a, 26b) à un second véhicule de transport (16), notamment un véhicule de levage (16), avec un mécanisme de pivotement (54) pour faire pivoter la pale (12) vers le haut,
- enlever le support de la bride d'adaptation (10),
- faire pivoter la pale (12) vers le haut via le mécanisme de pivotement (54) du second véhicule de transport (16), et
- transporter la pale (12) pivotée vers le haut via le second véhicule de transport (16) le long du virage.

2. Procédé de transport d'une pale (12) selon la revendication 1,
**caractérisé en ce que**
après le virage, le second véhicule de transport (16) est découplé de la bride d'adaptation (10) et le premier véhicule de transport (14) est à nouveau couplé à la bride d'adaptation (10).

3. Procédé de transport d'une pale (12) selon la revendication 1 ou 2,
**caractérisé en ce que**
le support (40) est réglable en hauteur.

4. Procédé de transport d'une pale (12) selon l'une au moins des revendications précédentes,
**caractérisé en ce que**
au moins un support (40) est respectivement mis en place latéralement par rapport au corps de bride (18).

5. Procédé de transport d'une pale (12) selon l'une au moins des revendications précédentes,
**caractérisé en ce que**
le support (40) peut être décalé latéralement vers l'extérieur.

6. Procédé de transport d'une pale (12) selon l'une au moins des revendications précédentes,
**caractérisé en ce que**
il est prévu, au niveau du corps de bride (18), un logement (44) qui reçoit le support (40) au moins en partie.

7. Procédé de transport d'une pale (12) selon la revendication 6,
**caractérisé en ce que**
le logement (44) est agencé entre le moyen de couplage de pale (24) et le moyen de couplage de véhicule (26, 26a, 26b).

8. Procédé de transport d'une pale (12) selon l'une au moins des revendications précédentes,
**caractérisé en ce que**
le moyen de couplage de pale (24) comprend une pluralité de perçages (28) qui sont réalisés pour recevoir des boulons de fixation, en particulier des boulons de vissage, prévus au niveau d'une racine (30) de la pale (12).

9. Procédé de transport d'une pale (12) selon la revendication 8,
**caractérisé en ce que**
les perçages (28) sont agencés le long d'une ligne courbe, notamment circulaire.

10. Procédé de transport d'une pale (12) selon la revendication 9,
**caractérisé en ce que**
un premier jeu de perçages (28) est agencé le long d'une première ligne courbe, notamment circulaire, et au moins un second jeu de perçages (28) est agencé le long d'une seconde ligne courbe, notamment circulaire, la première ligne et la seconde ligne présentant des distances radiales différentes par rapport à un axe médian (M) du corps de bride (18) passant verticalement à travers le plan d'extension (E) du corps de bride (18).

11. Procédé de transport d'une pale (12) selon l'une au moins des revendications précédentes,
**caractérisé en ce que**
la bride d'adaptation (10) présente un premier moyen de couplage de véhicule (26a) et au moins un deuxième moyen de couplage de véhicule (26b), le deuxième moyen de couplage de véhicule (26b) étant réalisé au niveau du corps de bride (18), décalé sous un angle (α), notamment de 180°, dans le plan d'extension (E) par rapport au premier moyen de couplage de véhicule (26a).

12. Procédé de transport d'une pale (12) selon l'une au moins des revendications précédentes,
**caractérisé en ce que**
le moyen de couplage de véhicule (26, 26a, 26b) présente au moins un boulon (36), notamment orienté à l'horizontale, qui est réalisé pour être reçu dans un couplage à dents prévu au niveau du véhicule de transport (14, 16).

13. Procédé de transport d'une pale (12) selon l'une au moins des revendications précédentes,
**caractérisé en ce que**
le moyen de couplage de pale (24) est réalisé au niveau d'un premier côté du corps de bride (18) et le moyen de couplage de véhicule (26, 26a, 26b) est réalisé au niveau d'un second côté du corps de bride (18) opposé au premier côté.

14. Procédé de transport d'une pale (12) selon l'une au moins des revendications précédentes,
**caractérisé en ce que**
le corps de bride (18) est réalisé en forme d'anneau, notamment en forme d'anneau circulaire.
